# EUROPEAN PATENT SPECIFICATION

(11) **EP 2 297 995 B1**
(45) Date of publication and mention of the grant of the patent: **22.11.2017**
(21) Application number: 09776730.5
(22) Date of filing: 15.06.2009
(51) Int. Cl.: H04W 16/04, H04W 24/02, H04W 16/10, H04W 92/12

(54) **METHOD OF SUBCARRIER ALLOCATION IN AN OFDMA-BASED COMMUNICATION NETWORK AND NETWORK**
VERFAHREN ZUR ZUTEILUNG VON UNTER-TRÄGERN IN EINEM OFDMA-BASIERTEN KOMMUNIKATIONSNETZWERK UND NETZWERK
PROCÉDÉ D ATTRIBUTION DE SOUS-PORTEUSE DANS UN RÉSEAU DE COMMUNICATION BASÉ SUR OFDMA ET RÉSEAU

(30) Priority: 17.06.2008 EP 08010966
(43) Date of publication of application: 23.03.2011
(73) Proprietor: NEC Corporation, Tokyo 108-8001 (JP)
(72) Inventor: ZHOU, Yuefeng, Oxshott, KT22 0RW (GB); ZEIN, Nader, London NW10 7DU (GB)
(74) Representative: Patent- und Rechtsanwälte Ullrich & Naumann
(86) International application number: PCT/EP2009/004291
(87) International publication number: WO 2010/003509

(56) References cited:
- EP-A- 1 806 942
- WO-A-2007/108769
- US-A1- 2007 086 406
- US-A1- 2007 254 620

## Description

The present invention relates to a method of subcarrier allocation in an OFDMA-based communication network, wherein said network includes a network controller and a number of base stations, wherein said network is divided into different cells and/or sectors, and wherein subchannels are generated by forming subsets of active orthogonal subcarriers of the OFDMA frame structure.

Furthermore, the present invention relates to a network applying OFDMA technology, wherein said network includes a network controller and a number of base stations, wherein said network is divided into different cells and/or sectors, and wherein subchannels are generated by forming subsets of active orthogonal subcarriers of the OFDMA frame structure.

OFDMA (Orthogonal Frequency Division Multiple Access) is a nowadays widespread technology for data transmission which is based on the usage of a large number of closely spaced orthogonal subcarriers. In particular in wireless communication systems OFDMA becomes more and more accepted and has been named as a candidate for future 4G mobile communication standards and wireless broadband networks. As a popular example for the application of OFDMA in wireless communication systems it is to be referred to WiMAX. WiMAX is defined as World Wide Interoperability for Microwave Access based upon the standards family of IEEE 802.16. Another popular example for the application of OFDMA is LTE. LTE is defined as Long Term Evolution based upon the standards specified by 3GPP standard organization.

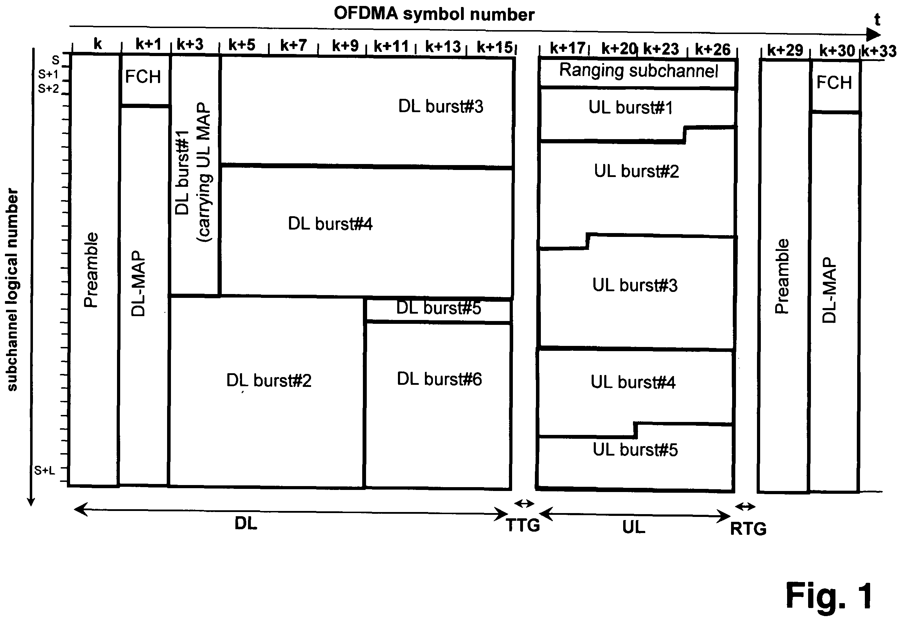

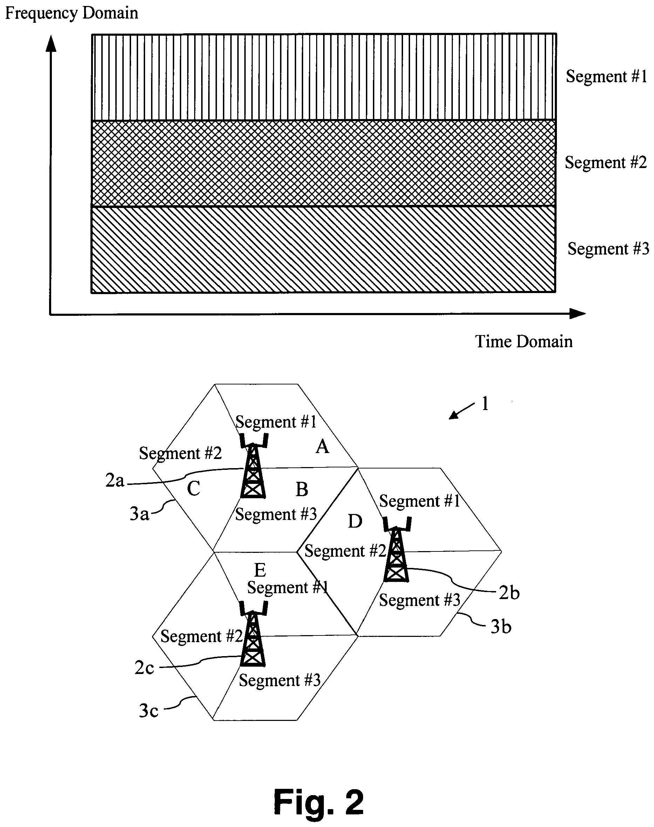

In existing OFDMA communication systems the OFDMA frame structure is divided by subcarriers in frequency domain, and by symbols in time domain. Users will be assigned a two dimensional (time and frequency domains) allocation, called "burst", to transmit/receive data. According to prior art solutions, active orthogonal subcarriers of the frequency domain are divided into subsets of subcarriers; each subset is termed a subchannel. Considering for example the TDD (Time Division Duplexing) OFDMA frame structure as used in mobile WiMAX which is depicted in Fig. 1: in frequency domain (vertical axis), the frame structure is divided by subchannels *s*, *s+1*, *s+2*, ..., *s+L*, each subchannel being composed of multiple OFDMA subcarriers (not shown), and, in time domain, the frame structure is divided by OFDMA symbols (numbered k).
In OFDMA communication systems intra-cell interferences are avoided, since each user is exclusively assigned a subset of subcarriers. However, due to the limited spectrum resources allocated to wireless networks, interferences between different cells are a challenging problem and the availability of resource allocation schemes that enable an efficient utilization of the spectrum is essential. In general, various frequency reuse factors are configured during the network planning stage in order to achieve high capacity and coverage with lower network cost. For instance, according to a specific scenario with frequency reuse, all cells of a network (or at least a certain number of cells) might be operating on the same frequency band. This means that users' bursts in different cells may overlap, thus introducing heavy co-channel interference (CCI).
To decrease the CCI, a frequency reuse factor of 3 (or higher) can be implemented by using a so-called segmentation to maximize the spectral efficiency. For example, in WiMAX, all the subchannels are further grouped into 3 (or more), wherein each group of subchannels forms a segment. Each segment is assigned to different sectors or cells during the network planning stage, thus avoiding interferences. Fig. 2 illustrates a specific example of how to assign a group of subchannels, which is called a segment, to different sectors of a network to avoid co-channel interference. EP 1 806 942 A1 discloses a method of semi-dynamic centralized interference coordination in a radio access network, wherein a base station controller handles the interference problem by assigning time/frequency resources to different base stations.

US 2007/0254620 A1 discloses femtocells keeping track of network changes by providing scanned cell information including cell identification information.

WO 2007/108769 A1 describes dynamic frequency reuse in cellular networks based on periodical measurements.

Normally, the configuration of frequency reuse for the network is decided in a network planning stage and will be fixed during the operation of the network. However, nowadays a network can not be assumed to be static during its operation phase. In particular because of the steadily increasing employment of nomadic base stations, such as moving relay stations or femtocell access points, the topology and the characteristics of modern communication networks will dynamically change during operation. As a result, resource allocation that was assigned in an optimal way during initial deployment of the network might turn out to be suboptimal and inefficient during a later network operation stage.
It is therefore the objective of the present invention to improve and further develop a method and a network of the initially described type in such a way that the efficiency of radio resources usage is enhanced and the impact of co-channel interference is minimized during the operation phase of the network.
In accordance with the invention, the aforementioned object is accomplished by a method comprising the features of claim 1 and a network comprising the features of claim 13.

Advantageous embodiments are described by the dependent claims.

According to the invention it has first been recognized that deciding the assignment of subchannels during the network planning stage means that it is nearly fixed during the network's operation phase, thus could not be adapted neither to a dynamically changing interference status nor to a dynamically changing network load. Furthermore, it has been recognized that this is a rather severe problem when nomadic style base stations are used in the network, since subchannels used for these base stations are very likely to overlap with subchannels already in use for existing base stations in neighboring cells/sectors, thus resulting in co-channel interferences. According to the invention base stations of the network perform measurements of total traffic load within the cells/sectors and/or interference power they experience from neighboring cells and/or sectors. Based on the outcome of these measurements, subchannel allocation is performed. Consequently, the number and allocation of subchannels can be dynamically changed within cells/sectors of the network to cope with various interference and traffic load situations. According to the invention a dynamic adaptation of resource distribution to changing network conditions is possible, thereby achieving a significant enhancement with respect to an optimal usage of limited spectrum resources.

The method in accordance with the present invention can most suitably applied for WiMAX, LTE (Long Term Evolution), WiMAX Femtocell and LTE Femtocell. Furthermore, it is to be noted the method according to the present invention is applicable to various duplexing schemes, in particular to TDD (Time Division Duplex), which is employed in most WiMAX implementations, and to FDD (Frequency Division Duplex), which employs a symmetric downlink and uplink channel pair and is commonly used in cellular 2G and 3G networks. In case of applying the method according to the present invention in FDD schemes (either full-duplex or half-duplex) base station measurements and subchannel allocation will be performed for both channels of the symmetric downlink and uplink channel pair individually.

According to a specific embodiment, in addition to fixed base stations the network includes access points, relay stations and/or femto radio base stations, also known as femto-cells, home base stations, home BTS, picocells, or homeNBs. These types of base stations typically are of nomadic style, i.e. they are installed/uninstalled quite often and on a rather unstructured basis, resulting in frequent topology changes of the network on a local basis. The present invention is particularly suited to dynamically adapt resource allocation to such kind of modifications and alterations. However, when referred to "base stations" it is intended to include all possible kinds of devices that transmit and receive packets in the network and that enable users to access the network.

Preferably, the base stations of the network are configured to report the results of their measurements to the (higher layer) network controller. Current systems, such as WiMAX, do not send such layer one information to higher layer network controllers, such as ASN (Access Service Network) gateways.

According to a preferred embodiment it may be provided that the base stations, beside the measurement results, send additional information to the network controller. These additional information may include, e.g., IDs of surrounding base stations, the required number of subchannels, the time when said subchannels should be allocated, the maximum number of supported connections and/or the maximum traffic load that is supported. Advantageously, the network controller disposes of as many information as possible that might be relevant with respect to the avoidance of co-channel interference and load dependent resource allocation.

In a next step it may be provided that the network controller, based on the measurement results (where appropriate together with the additional information) received from said base stations, calculates an appropriate number of subchannels for each cell and/or sector of the network. Further, the network controller may allocate the calculated appropriate number of subchannels to each cell and/or sector.

Advantageously, the network controller dynamically adjusts the number and/or location of subchannels allocated to the cells and/or sectors in case of changing traffic load. Alternatively or additionally, the network controller may re-allocate subchannels in case existing base stations of the network are deactivated and/or new base stations are added to the network. From the measurements reports of the base stations the networker controller will receive all information required to carry out these steps.

It may be provided that the network controller, each time it has adjusted/re-allocated subchannels, sends respective notifications to the base stations (including relay stations, femtocell, access points, or the like) of the network. The base stations, upon receiving the information from the network controller, may then use the assigned subchannels contained in the notification. In other words, by means of the notifications the base stations are enabled to adapt their broadcasting and/or receiving characteristics accordingly, if required.

According to another preferred embodiment it may be provided that the base stations request the higher layer network controller to change the number and allocation of subchannels for their cells/sectors in terms of the measured interference and traffic load changing.

With respect to constantly keeping the allocation updated, the measurements carried out by the base stations may be performed periodically. As a result, possible spectrum resource adjustments and subchannel re-allocations can be accomplished on a regular basis, so that the network performance is constantly kept on an optimal or near optimal level and the overall network throughput is maximized. The time interval between consecutive measurements may be specified e.g. depending on the actual dynamics within the network. For instance, in case the network proves to be rather static, a longer time interval may be specified than in case of frequent topologic alterations and/or in case of irregular and unbalanced traffic loads.

With respect to a high overall control it proves to be beneficial that the measurements are performed under the instruction of the network controller. In particular, the higher layer network controller may instruct the base stations how to perform the measurement on traffic load and interference power by sending controlling signaling. For example, the network controller may tell the base stations when and how frequently to do the measurement and feedback the results of the measurements. Another example is that the network controller may tell the base stations how to do interference measurements. The interference measurements may be based on the preamble over whole band, the preamble subcarriers over partial band, the pilot preamble, or other training sequences. In some cases, the base stations could only detect the IDs of the base stations surrounding themselves by scanning the preambles or other training sequences.

In the following a first implementation scenario is described in more detail which is directed to interference mitigation and subchannel allocation for femtocell access points. In such case the detailed steps for the implementation may be as follows:
1. When the femtocell access points is switched on, it will start to scan the neighboring base stations (including relay stations, access points, and the like) which will possibly interfere its communication by detecting the received preambles or other training sequences of the OFDMA frame structure;
2. The femtocell access point reports the IDs of the base stations surrounding itself to the higher layer network controller; the femtocell access point may report other parameters, such as maximum connections supported by this access point, or maximum traffic load it supports, to the network controller to help the network controller made a proper decision.
3. The network controller will decide to re-allocate a few subchannels from one or multiple base stations, which are surrounding the femtocell access point and have lower traffic load, to allow the femtocell access point to be used in order to access the network;
4. The femtocell access point starts to use the subchannels allocated by the network controller.

Another example implementation scenario aims at an adaptation to the dynamically changing network traffic load within cells/sectors of the network. Here, the implementation steps may be as follows:
1. Base stations (including relay stations, access points, and the like) periodically measure the traffic load within their cell/sector;
2. The base stations report the measured traffic load to the higher layer network controller. Additionally, a base station may directly ask the network controller to adjust (increase or decrease) the number of subchannels based on its traffic load.
3. The network controller will determine the number of subchannels for each cell/sector based on the measurements (or requests) reported by the base stations.
4. The network controller will inform the change of the number/allocation of the subchannels to the base stations.
5. The base stations will start to use the allocated subchannels for communications.

There are several ways to design and further develop the teaching of the present invention in an advantageous way. To this end, it is to be referred to the patent claims subordinate to patent claims 1 and 15 and to the following explanation of a preferred example of an embodiment of the invention, illustrated by the figure. In connection with the explanation of the preferred example of an embodiment of the invention by the aid of the figure, generally preferred embodiments and further developments of the teaching will be explained.

In the drawings:
- Fig. 1: shows a TDD OFDMA frame structure as currently employed for Mobile WiMAX,
- Fig. 2: illustrates a co-channel interference scenario according to the state of the art by assigning a group of subchannels to a sector,
- Fig. 3: illustrates the co-channel interference scenario from Fig. 2 with an additional femtocell access point in one sector, and
- Fig. 4: is a flow diagram of an algorithm for dynamic subchannel allocation according to an embodiment of the present invention.

With reference to Fig. 2, in the lower part a network 1 is schematically depicted with a total of three base stations 2a, 2b, 2c. The corresponding cells 3a, 3b, 3c are indicated by the hexagons surrounding each of the base stations 2a, 2b, 2c. Each cell 3a, 3b, 3c is divided into three sectors. In cell 3a these sectors are referred to as A, B, and C. Further, the left sector of cell 3b is labeled D, and the upper sector of cell 3c is labeled E.

As can be obtained from the upper part of Fig. 2, in OFDMA frequency domain a so-called segmentation is implemented according to which subchannels are grouped to form three segments #1, #2, and #3. To avoid co-channel interference each segment is assigned to different sectors or cells during the initial network planning stage. For instance, in cell 3a, segment #1 is assigned to sector A, segment #2 is assigned to sector B, and segment #3 is assigned to sector C.

Normally, according to prior art solutions the configuration of frequency reuse for the network will be fixed during the operating of the network. This makes it impossible to adapt to dynamically changing network load within each sector. For example, in Fig. 2, if sector A is experiencing much higher traffic compared to sector B and C. In addition assume sector C has very low traffic. In order to maximize the overall network throughput, subchannels in sector C should be shifted/reallocated to sector A, which means sector A could have more radio resource to facilitate the higher traffic load. However, in prior art the number of subchannels assigned to each sector is fixed during operating the network so that no such balancing means can be carried out.

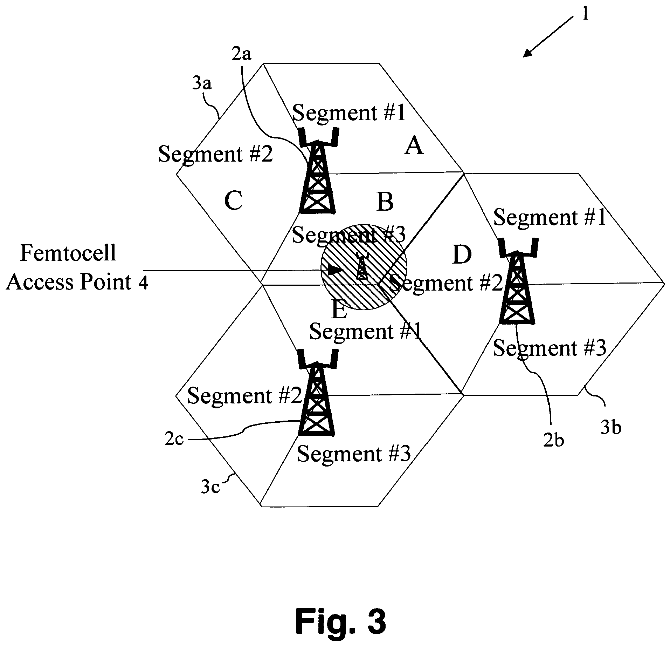

Fig. 3 illustrates the same scenario as Fig. 2 with the only difference that a new femtocell access point 4 appears within the network 1. The femtocell access point 4 is basically located in the intersection point of cells 3a, 3b, and 3c. More specifically, the coverage area of the access point 4 overlaps with the sectors B, D, and E. As already mentioned above, the assignment of subchannels is decided during the network planning stage. This means that the segmentation described in connection with Fig. 2 is nearly fixed during the operation phase of the network 1. Consequently, an adaption of the spectrum resource distribution within the network 1 to the dynamically changing interference status caused by the introduction of femtocell access point 4 into the network is impossible. In the specific scenario of Fig. 3, femtocell access point 4 can thus not been allocated within the sector B. Basically, it is difficult for the femtocell access point 4 to avoid interference from the neighboring sectors by using fixed subchannel allocating scheme, since the subchannels used for the femtocell access point 4 would be overlapped by the subchannels used by the neighboring sectors, which are sectors B, D or E.

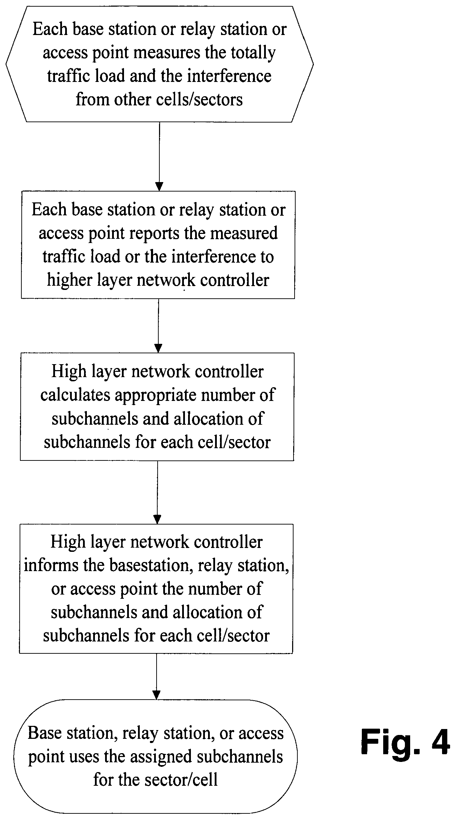

Fig. 4 depicts a flow chart of an algorithm for dynamic subchannel allocation according to an embodiment of the present invention. Mainly, there are five steps in the dynamic subchannel allocation scheme according to the illustrated embodiment:

First step: The base stations of the network (including relay stations, access points, and the like) perform measurements on total traffic load within their cell/sector and the co-channel interference power from neighboring cells/sectors. This measurement could be periodically performed under the instruction of a network controller. The higher layer network controller may instruct base stations how to perform the measurement on traffic load and interference power by sending controlling signaling. For example, the higher layer network controller may tell the base stations when and how frequently to do the measurement and feedback the results of the measurements. Another example is that the higher layer network controller may tell the base stations how to do interference measurement. The interference measurement may be based on the preamble over whole band, the preamble subcarriers over partial band, the pilot preamble, or other training sequences. In some cases, the base stations could only detect the IDs of the base stations surrounding themselves by scanning the preambles or other training sequences.

Second step: The base stations report the results of the measurement, such as traffic load within the cell/sector and/or the interference power, and/or the IDs of the base stations surrounding themselves to the network controller. The base stations may also send additional information to the network controller. This information may include the required number of subchannels, the time when the subchannels should be allocated, thus facilitating the higher layer network controller to assign subchannels.

Third step: The higher layer network controller calculates appropriate number of subchannels assigned to each sector/cell based on the measurements and the additional information reported from the base stations.

Fourth step: The higher layer network controller informs the number and the allocation of the subchannels to the base stations.

Fifth step: The base stations use the allocated subchannels for communications.

Many modifications and other embodiments of the invention set forth herein will come to mind the one skilled in the art to which the invention pertains having the benefit of the teachings presented in the foregoing description and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. Method of subcarrier allocation in an OFDMA-based communication network, wherein said network includes a network controller and a number of base stations including femto radio base stations causing a dynamically changing network topology, wherein said network is divided into different cells and/or sectors, and wherein subchannels are generated by forming subsets of active orthogonal subcarriers of the OFDMA frame structure,
**characterized in that** said base stations measure and report the results of measurements and additional information to said network controller, wherein the results of measurements are at least one of the traffic load and the interference from neighboring and/or other cells and/or sectors, wherein the interference measurements are performed based on the preamble of the OFDMA frame over the whole frequency band, on the preamble of subcarriers over a partial frequency band, and/or on the pilot preamble, and wherein the additional information includes identifications of surrounding base stations, and
said network controller performs an allocation of said subchannels to said cells and/or sectors on the basis of the results of said measurements and the additional information.

2. Method according to claim 1, wherein said number of base stations includes access points and/or relay stations.

3. Method according to any of claim 1 or 2, wherein said additional information further includes the required number of subchannels, the time when said subchannels should be allocated, the maximum number of supported connections and/or the maximum traffic load that is supported.

4. Method according to any of claims 1 to 3, wherein said network controller, based on said measurement results and/or said additional information received from said base stations, calculates an appropriate number of subchannels for each of said cells and/or sectors.

5. Method according to claim 4, wherein said network controller allocates said calculated appropriate number of subchannels to said cells or sectors.

6. Method according to any of claims 1 to 5, wherein said network controller dynamically adjusts the number and/or location of subchannels allocated to said cells and/or sectors in case of changing traffic load.

7. Method according to any of claims 1 to 6, wherein said network controller re-allocates subchannels in case existing base stations of said network are deactivated and/or new base stations are added to said network.

8. Method according to any of claims 5 to 7, wherein said network controller informs said base stations of the allocation/re-allocation.

9. Method according to claim 8, wherein said base stations, upon respective notification from said network controller, use said assigned subchannels for said cells and/or sectors.

10. Method according to any of claim 1 to 9, wherein said base stations, based on the result of said measurements, request said network controller to change the number and allocation of subchannels for their cells and/or sectors.

11. Method according to any of claims 1 to 10, wherein said measurements are performed periodically.

12. Method according to any of claims 1 to 11, wherein said measurements are performed under the instruction of said network controller.

13. Network applying OFDMA technology, wherein said network includes a network controller and a number of base stations including femto radio base stations causing a dynamically changing network topology, wherein said network is divided into different cells and/or sectors, and wherein subchannels are generated by forming subsets of active orthogonal subcarriers of the OFDMA frame structure,
**characterized in that**
said base stations are configured to measure and report the results of measurements and additional information to said network controller, wherein the results of measurements are at least one of the traffic load and the interference from neighboring and/or other cells and/or sectors, wherein the interference measurements are performed based on the preamble of the OFDMA frame over the whole frequency band, on the preamble of subcarriers over a partial frequency band, and/or on the pilot preamble, and wherein the additional information includes identifications of surrounding base stations, and
control means are provided for performing an allocation of said subchannels to said cells and/or sectors on the basis of the results of said measurements and the additional information.

14. Network according to claim 13, wherein said number of base stations includes access points and/or relay stations.

15. Network according to claim 13 or 14, wherein said network controller is an ASN (Access Service Network) gateway.

## Patentansprüche

1. Verfahren zur Zuteilung von Unterträgern in einem OFDMA-basierten Kommunikationsnetzwerk, wobei das Netzwerk einen Netzwerkkontroller umfasst sowie eine Anzahl von Basisstationen, einschließlich Femto-Funkbasisstationen, die eine sich dynamisch verändernde Netzwerktopologie verursachen, wobei das Netzwerk in verschiedene Zellen und/oder Sektoren unterteilt ist und wobei Unterkanäle erzeugt werden, indem Untermengen von aktiven orthogonalen Unterträgern der OFDMA-Rahmenstruktur gebildet werden,
**dadurch gekennzeichnet, dass** die Basisstationen Messungen durchführen und die Ergebnisse der Messungen sowie Zusatzinformationen an den Netzwerkkontroller berichten, wobei die Ergebnisse von Messungen mindestens die Verkehrslast und/oder die Interferenz von benachbarten und/oder anderen Zellen und/oder Sektoren sind, wobei die Interferenzmessungen basierend auf der Präambel des OFDMA-Rahmens über das gesamte Frequenzband, auf der Präambel von Unterträgern über ein Teilfrequenzband und/oder auf der Pilot-Präambel durchgeführt werden, und wobei die Zusatzinformationen Identifikationen von umgebenden Basisstationen umfassen, und
dass der Netzwerkkontroller eine Zuteilung der Unterkanäle zu den Zellen und/oder Sektoren auf der Basis der Ergebnisse der Messungen und der Zusatzinformationen durchführt.

2. Verfahren nach Anspruch 1, wobei die Anzahl von Basisstationen Zugangspunkte und/oder Relaisstationen umfasst.

3. Verfahren nach einem der Ansprüche 1 oder 2, wobei die Zusatzinformation ferner die erforderliche Anzahl von Unterkanälen, die Zeit, zu der die Unterkanäle zugeteilt werden sollen, die maximale Anzahl der unterstützten Verbindungen und/oder die maximale Verkehrslast, die unterstützt wird, umfasst.

4. Verfahren nach einem der Ansprüche 1 bis 3, wobei der Netzwerkkontroller auf der Grundlage der von den Basisstationen empfangenen Messergebnisse und/oder Zusatzinformationen eine geeignete Anzahl von Unterkanälen für jede/n der Zellen und/oder Sektoren berechnet.

5. Verfahren nach Anspruch 4, wobei der Netzwerkkontroller die berechnete geeignete Anzahl von Unterkanälen den Zellen oder Sektoren zuteilt.

6. Verfahren nach einem der Ansprüche 1 bis 5, wobei der Netzwerkkontroller die Anzahl und/oder den Ort von den Zellen und/oder Sektoren zugeteilten Unterkanälen bei wechselnder Verkehrslast dynamisch einstellt.

7. Verfahren nach einem der Ansprüche 1 bis 6, wobei der Netzwerkkontroller Unterkanäle neu zuteilt, falls vorhandene Basisstationen des Netzwerks deaktiviert und/oder neue Basisstationen dem Netzwerk hinzugefügt werden.

8. Verfahren nach einem der Ansprüche 5 bis 7, wobei der Netzwerkkontroller die Basisstationen über die Zuteilung/Neuzuteilung informiert.

9. Verfahren nach Anspruch 8, wobei die Basisstationen bei entsprechender Benachrichtigung von dem Netzwerkkontroller die zugeteilten Unterkanäle für die Zellen und/oder Sektoren verwenden.

10. Verfahren nach einem der Ansprüche 1 bis 9, wobei die Basisstationen auf der Grundlage des Ergebnisses der Messungen den Netzwerkkontroller anfragen, die Anzahl und die Zuteilung von Unterkanälen für ihre Zellen und/oder Sektoren zu ändern.

11. Verfahren nach einem der Ansprüche 1 bis 10, wobei die Messungen periodisch durchgeführt werden.

12. Verfahren nach einem der Ansprüche 1 bis 11, wobei die Messungen auf Anweisung des Netzwerkkontrollers durchgeführt werden.

13. Netzwerk, das OFDMA-Technologie anwendet, wobei das Netzwerk einen Netzwerkkontroller umfasst sowie eine Anzahl von Basisstationen, einschließlich Femto-Funkbasisstationen, die eine sich dynamisch verändernde Netzwerktopologie verursachen, wobei das Netzwerk in verschiedene Zellen und/oder Sektoren unterteilt ist und wobei Unterkanäle durch Bilden von Untermengen von aktiven orthogonalen Unterträgern der OFDMA-Rahmenstruktur erzeugt werden
**dadurch gekennzeichnet, dass** die Basisstationen so konfiguriert sind, dass sie Messungen durchführen und die Ergebnisse der Messungen sowie Zusatzinformationen an den Netzwerkkontroller berichten, wobei die Ergebnisse von Messungen mindestens die Verkehrslast und/oder die Interferenz von benachbarten und/oder anderen Zellen und/oder Sektoren sind, wobei die Interferenzmessungen basierend auf der Präambel des OFDMA-Rahmens über das gesamte Frequenzband, auf der Präambel von Unterträgern über ein Teilfrequenzband und/oder auf der Pilot-Präambel durchgeführt werden, und wobei die Zusatzinformationen Identifikationen von umgebenden Basisstationen umfassen, und
dass Steuermittel bereitgestellt sind, um eine Zuteilung der Unterkanäle zu den Zellen und/oder Sektoren auf der Basis der Ergebnisse der Messungen und der Zusatzinformationen durchzuführen.

14. Netzwerk nach Anspruch 13, wobei die Anzahl von Basisstationen Zugangspunkte und/oder Relaisstationen umfasst.

15. Netzwerk nach Anspruch 13 oder 14, wobei der Netzwerkkontroller ein ASN (Access Service Network) Gateway ist.

## Revendications

1. Procédé d'affectation de sous-porteuses dans un réseau de communication basé sur la technologie d'accès multiple par répartition orthogonale de la fréquence, OFDMA, dans lequel ledit réseau comporte un contrôleur de réseau et un nombre de stations de base, incluant des stations de base radio femto occasionnant une topologie de réseau à modification dynamique, dans lequel ledit réseau est divisé en différentes cellules et/ou en différents secteurs, et dans lequel des sous-canaux sont générés en formant des sous-ensembles de sous-porteuses orthogonales actives de la structure de trame d'accès OFDMA ;
caractérisé en ce qui :
lesdites stations de base mesurent et rendent compte des résultats de mesures et d'informations supplémentaires au contrôleur de réseau, dans lequel les résultats de mesures correspondent à au moins l'un des éléments parmi la charge de trafic et le brouillage provenant de cellules voisines et/ou de secteurs voisins et/ou d'autres cellules et/ou secteurs, dans lequel les mesures de brouillage sont mises en oeuvre sur la base du préambule de la trame d'accès OFDMA sur la bande de fréquence complète, du préambule de sous-porteuses sur une bande de fréquences partielle, et/ou du préambule pilote, et dans lequel les informations supplémentaires incluent des identifications de stations de base environnantes ; et
ledit contrôleur de réseau met en oeuvre une affectation desdits sous-canaux auxdites cellules et/ou auxdits secteurs sur la base des résultats desdites mesures et des informations supplémentaires.

2. Procédé selon la revendication 1, dans lequel ledit nombre de stations de base inclut des points d'accès et/ou des stations relais.

3. Procédé selon l'une quelconque des revendications 1 ou 2, dans lequel lesdites informations supplémentaires incluent en outre le nombre requis de sous-canaux, le moment où lesdits sous-canaux devraient être affectés, le nombre maximum de connexions prises en charge et/ou la charge de trafic maximale qui est prise en charge.

4. Procédé selon l'une quelconque des revendications 1 à 3, dans lequel ledit contrôleur de réseau, sur la base desdits résultats de mesure et/ou desdites informations supplémentaires reçues en provenance desdites stations de base, calcule un nombre approprié de sous-canaux pour chacune desdites cellules et/ou chacun desdits secteurs.

5. Procédé selon la revendication 4, dans lequel ledit contrôleur de réseau affecte ledit nombre approprié calculé de sous-canaux auxdites cellules ou auxdits secteurs.

6. Procédé selon l'une quelconque des revendications 1 à 5, dans lequel ledit contrôleur de réseau ajuste dynamiquement le nombre et/ou l'emplacement de sous-canaux affectés auxdites cellules et/ou auxdits secteurs en cas de modification de la charge de trafic.

7. Procédé selon l'une quelconque des revendications 1 à 6, dans lequel ledit contrôleur de réseau réaffecte des sous-canaux au cas où des stations de base existantes dudit réseau sont désactivées et/ou au cas où de nouvelles stations de base sont ajoutées audit réseau.

8. Procédé selon l'une quelconque des revendications 5 à 7, dans lequel ledit contrôleur de réseau informe lesdites stations de base de l'affectation / réaffectation.

9. Procédé selon la revendication 8, dans lequel lesdites stations de base, suite à une notification respective en provenance dudit contrôleur de réseau, utilisent lesdits sous-canaux affectés pour lesdites cellules et/ou lesdits secteurs.

10. Procédé selon l'une quelconque des revendications 1 à 9, dans lequel lesdites stations de base, sur la base du résultat desdites mesures, demandent audit contrôleur de réseau de modifier le nombre et l'affectation de sous-canaux pour leurs cellules et/ou secteurs.

11. Procédé selon l'une quelconque des revendications 1 à 10, dans lequel lesdites mesures sont mises en oeuvre périodiquement.

12. Procédé selon l'une quelconque des revendications 1 à 11, dans lequel lesdites mesures sont mises en oeuvre sous l'instruction dudit contrôleur de réseau.

13. Réseau appliquant la technologie d'accès OFDMA, dans lequel ledit réseau inclut un contrôleur de réseau et un nombre de stations de base, incluant des stations de base radio femto occasionnant une topologie de réseau à modification dynamique, dans lequel ledit réseau est divisé en différentes cellules et/ou en différents secteurs, et dans lequel des sous-canaux sont générés en formant des sous-ensembles de sous-porteuses orthogonales actives de la structure de trame d'accès OFDMA,
**caractérisé en ce que** :
lesdites stations de base sont configurées de manière à mesurer et à rendre compte des résultats de mesures et d'informations supplémentaires au contrôleur de réseau, dans lequel les résultats de mesures correspondent à au moins l'un des éléments parmi la charge de trafic et le brouillage provenant de cellules voisines et/ou de secteurs voisins et/ou d'autres cellules et/ou secteurs, dans lequel les mesures de brouillage sont mises en oeuvre sur la base du préambule de la trame d'accès OFDMA sur la bande de fréquence complète, du préambule de sous-porteuses sur une bande de fréquences partielle, et/ou du préambule pilote, et dans lequel les informations supplémentaires incluent des identifications de stations de base environnantes ; et
des moyens de commande sont fournis pour mettre en oeuvre une affectation desdits sous-canaux auxdites cellules et/ou auxdits secteurs sur la base des résultats desdites mesures et des informations supplémentaires.

14. Réseau selon la revendication 13, dans lequel ledit nombre de stations de base inclut des points d'accès et/ou des stations relais.

15. Réseau selon la revendication 13 ou 14, dans lequel ledit contrôleur de réseau est une passerelle de réseau de service d'accès (ASN).
